# EUROPÄISCHE PATENTANMELDUNG

(11) **EP 2 453 363 A1**
(43) Veröffentlichungstag der Anmeldung: **16.05.2012**
(21) Anmeldenummer: 11187004.4
(22) Anmeldetag: 28.10.2011
(51) Int. Cl.: G06F 13/42, G06F 11/30

(54) **Verfahren zum Betreiben eines Bussystems, Bussystem und Haushaltsgerät mit einem Bussystem**

(30) Priorität: 09.11.2010 DE 102010043659
(71) Anmelder: BSH Bosch und Siemens Hausgeräte GmbH, 81739 München (DE)
(72) Erfinder: Gabler, Michael, 93047 Regensburg (DE); Gaugler, Johannes, 93073 Neutraubling (DE); Schieder, Josef, 93055 Regensburg (DE)

(57) **Zusammenfassung**

Es soll eine Lösung aufgezeigt werden, wie bei einem Bussystem (1) für Haushaltsgeräte ein Busteilnehmer (3 bis 8) den Betrieb bzw. die Präsenz eines anderen Busteilnehmers (3 bis 8) überwachen kann, ohne dass das Bussystem (1) überlastet wird. Es wird ein Verfahren geschaffen, bei welchem durch zumindest einen ersten Busteilnehmer (3 bis 8) in seinem ordnungsgemäßen Betrieb in vorbestimmten Zeitabständen eine Präsenznachricht (PN3 bis PN8) an den Kommunikationsbus (2) übertragen wird, durch welche der Betrieb des ersten Busteilnehmers (3 bis 8) signalisiert wird. Es wird auch ein Bussystem (1) bereitgestellt, wie auch ein Haushaltsgerät (10) mit einem solchen Bussystem (1).

## Beschreibung

Die Erfindung betrifft ein Verfahren zum Betreiben eines Bussystems für Haushaltsgeräte. Das Bussystem umfasst einen Kommunikationsbus zum Übertragen von Nachrichten sowie eine Mehrzahl von an den Kommunikationsbus angeschlossenen Busteilnehmern. Die Erfindung betrifft außerdem ein Bussystem, wie auch ein Haushaltsgerät mit einem Bussystem.

Es geht vorliegend also um ein Bussystem für Haushaltsgeräte: Einerseits gilt das Interesse vorliegend einem Bussystem, bei welchem einzelne Haushaltsgeräte als Busteilnehmer miteinander kommunizieren. Andererseits richtet sich das Interesse vorliegend auch auf ein geräteinternes Bussystem, bei welchem interne Komponenten - etwa Mikroprozessoren bzw. Mikrokontroller―eines Haushaltsgerätes miteinander kommunizieren. In beiden Fällen muss sichergestellt werden, dass jeder Busteilnehmer die Präsenz der anderen Busteilnehmer am Kommunikationsbus überwacht. Jeder Busteilnehmer muss wissen, ob die anderen in Betrieb sind oder aber gegebenenfalls ausgefallen sind. In der Regel erfolgt eine solche Überprüfung wie folgt:

Jeder Busteilnehmer sendet an alle anderen Busteilnehmer eine Aufforderung, eine Präsenznachricht an den Kommunikationsbus abzugeben bzw. sich zu melden. Sendet ein Busteilnehmer auf diese Aufforderung hin eine Präsenznachricht, so signalisiert er seinen Betrieb bzw. seine Präsenz am Kommunikationsbus. Dabei muss jeder Busteilnehmer eine Aufforderung an alle anderen Busteilnehmer senden. Aufgrund dieser individuellen Überprüfung der Präsenz der einzelnen Busteilnehmer müssen eine Vielzahl von Nachrichten bzw. Daten über den Kommunikationsbus übertragen werden, und der Kommunikationsbus wird relativ stark belastet. Die zur Verfügung stehende Bandbreite ist relativ gering, und es kann lediglich eine begrenzte Anzahl von Busteilnehmern eingesetzt werden.

Es ist Aufgabe der Erfindung, einen Weg aufzuzeigen, wie bei dem Verfahren der eingangs genannten Gattung der Kommunikationsbus entlastet werden kann, so dass mehr Bandbreite für die eigentliche Kommunikation zwischen den Busteilnehmern zur Verfügung steht bzw. mehrere Busteilnehmer eingesetzt werden können.

Diese Aufgabe wird erfindungsgemäß durch ein Verfahren mit den Merkmalen gemäß Patentanspruch 1 gelöst, wie auch durch ein Bussystem, welches die Merkmale des Patentanspruchs 9 aufweist, sowie durch ein Haushaltsgerät mit den Merkmalen des Patentanspruchs 10. Vorteilhafte Ausführungen der Erfindung sind Gegenstand der abhängigen Patentansprüche und der Beschreibung.

Ein erfindungsgemäßes Verfahren dient zum Betreiben eines Bussystems für Haushaltsgeräte. Das Bussystem umfasst einen Kommunikationsbus zum Übertragen von Nachrichten sowie eine Mehrzahl von Busteilnehmern, welche an den Kommunikationsbus angeschlossen sind. Durch zumindest einen ersten Busteilnehmer wird in seinem ordnungsgemäßen Betrieb in vorbestimmten Zeitabständen eine Präsenznachricht an den Kommunikationsbus übertragen, durch welche der Betrieb bzw. die Präsenz des ersten Busteilnehmers den anderen Busteilnehmern signalisiert wird.

Also wird der erfindungsgemäße Effekt dadurch erzielt, dass zumindest einer der Busteilnehmer― insbesondere eine Vielzahl von Busteilnehmern, bevorzugt alle an den Kommunikationsbus angeschlossenen Busteilnehmer-in vorbestimmten Zeitabständen eine Präsenznachricht über den Kommunikationsbus sendet und somit seine Präsenz bzw. seinen Betrieb am Kommunikationsbus signalisiert. Auf diese Weise können die anderen Busteilnehmer überprüfen, ob der erste Busteilnehmer ordnungsgemäß funktioniert oder aber gegebenenfalls ausgefallen ist, ohne dass eine Vielzahl von Aufforderungen an den ersten Busteilnehmer über den Kommunikationsbus gesendet werden müssen. Die Überprüfung des ordnungsgemäßen Betriebes des ersten Busteilnehmers durch die anderen Busteilnehmer kann somit ohne eine Aufforderung an den ersten Busteilnehmer erfolgen, eine solche Präsenznachricht zu senden. Der erste Busteilnehmer sendet nämlich in vorbestimmten Zeitabständen die Präsenznachricht an den Kommunikationsbus, also an alle anderen Busteilnehmer. Die Präsenznachricht ist somit eine Gruppennachricht, welche für alle anderen Busteilnehmer bestimmt ist und allen anderen Busteilnehmern den Betrieb bzw. die Präsenz des ersten Busteilnehmers signalisiert. Das erfindungsgemäße Verfahren hat somit den Vorteil, dass der Kommunikationsbus entlastet werden kann. Es erübrigen sich nämlich alle Anforderungsnachrichten, die im Stand der Technik zur Überprüfung des ordnungsgemäßen Betriebes eines einzelnen Busteilnehmers durch alle anderen Busteilnehmer über den Kommunikationsbus gesendet werden müssen. Zum einen steht somit mehr Bandbreite für die eigentliche Kommunikation zwischen den Busteilnehmern zur Verfügung. Zum anderen erfolgt die Überprüfung des Betriebszustands des ersten Busteilnehmers deutlich schneller als im Stand der Technik, weil keine separaten Anforderungsnachrichten gesendet werden müssen. Zudem kann auch die Anzahl der Busteilnehmer erhöht werden.

Gemäß einer ersten Alternative können die Busteilnehmer einzelne Haushaltsgeräte sein, welche über den Kommunikationsbus miteinander kommunizieren. Bei dieser Ausführungsform wird also derjenige Kommunikationsbus entlastet, über welchen einzelne Haushaltsgeräte - etwa in einem Haushalt - miteinander Daten austauschen. Gemäß einer zweiten Alternative können die Busteilnehmer geräteinterne Komponenten eines einzigen Haushaltsgerätes sein. Diese geräteinternen Komponenten können innerhalb des Haushaltsgerätes über den Kommunikationsbus miteinander kommunizieren. Bei dieser Ausführungsform ist der Kommunikationsbus also ein interner Bus des Haushaltsgeräts. Die Busteilnehmer können hier beispielsweise Mikroprozessoren beziehungsweise Mikrokontroller sein, welche in dem Haushaltsgerät jeweils zum Bereitstellen einer bestimmten Funktionalität dienen.

Unter einem Haushaltsgerät wird vorliegend ein Gerät verstanden, dass zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrier-Kombination oder ein Klimagerät. Das kann aber auch ein Haushaltskleingerät sein, wie beispielsweise ein Kaffeevollautomat oder eine Küchenmaschine.

Unter einem Kommunikationsbus wird vorliegend insbesondere eine elektrische Leitung oder aber ein drahtloser Kommunikationskanal verstanden, über welche bzw. welchen die Busteilnehmer miteinander kommunizieren - also Daten austauschen - können.

Also sendet der erste Busteilnehmer in seinem ordnungsgemäßen Betrieb in vorbestimmten Zeitabschnitten eine Präsenznachricht über den Kommunikationsbus; durch die Präsenznachricht werden die anderen Busteilnehmer des Bussystems über die Präsenz des ersten Busteilnehmers am Kommunikationsbus informiert. Bevorzugt sendet der erste Busteilnehmer die Präsenznachricht von sich alleine. Dies bedeutet, dass die Präsenznachricht durch den ersten Busteilnehmer ausschließlich aufgrund von internen Informationen - etwa eines Algorithmus - gesendet wird. Insbesondere wird die Präsenznachricht - im ordnungsgemäßen Betrieb des ersten Busteilnehmers - unabhängig von einer Anforderungsnachricht gesendet. Die anderen Busteilnehmer werden somit über die Präsenz des ersten Busteilnehmers informiert, ohne dass sie Anforderungsnachrichten an den ersten Busteilnehmer senden müssen.

Es erweist sich als besonders vorteilhaft, wenn in seinem ordnungsgemäßen Betrieb der erste Busteilnehmer die Präsenznachricht periodisch sendet. Dann können die anderen Busteilnehmer ohne viel Aufwand überprüfen, ob der erste Busteilnehmer ordnungsgemäß funktioniert oder nicht. Die anderen Busteilnehmer können nämlich auch periodisch überprüfen, ob der erste Busteilnehmer seine Präsenznachricht sendet oder nicht.

Also kann zumindest ein zweiter Busteilnehmer― insbesondere alle anderen, an den Kommunikationsbus angeschlossenen Busteilnehmer - überprüfen, ob der erste Busteilnehmer die Präsenznachricht sendet oder nicht. Falls diese Überprüfung negativ ausfällt, kann der zweite Busteilnehmer dann einen vorbestimmten Algorithmus durchführen. Also kann der zweite Busteilnehmer überprüfen, ob der erste Busteilnehmer seine Präsenz am Kommunikationsbus angezeigt hat oder nicht, nämlich durch Abgabe der Präsenznachricht. Wird durch den zweiten Busteilnehmer keine Präsenznachricht des ersten Busteilnehmers empfangen, so wird durch den zweiten Busteilnehmer der vorbestimmte Algorithmus durchgeführt. Eine solche Vorgehensweise hat den Vorteil, dass der zweite Busteilnehmer gegebenenfalls vorbestimmte Vorgänge bewirken kann, durch welche der erste Busteilnehmer aufgesucht beziehungsweise dazu aufgefordert wird, die Präsenznachricht zu senden.

Es erweist sich als besonders aufwandsarm, wenn die genannte Überprüfung dann durch den zweiten Busteilnehmer als negativ ausgefallen interpretiert wird, wenn seit dem Empfang der letzten Präsenznachricht des ersten Busteilnehmers eine vordefinierte Zeitdauer verstreicht und innerhalb dieser Zeitdauer der zweite Busteilnehmer keine weitere Präsenznachricht des ersten Busteilnehmers empfängt. Beispielsweise kann in dem zweiten Busteilnehmer ein Zeitgeber bei Empfangen einer jeden Präsenznachricht des ersten Busteilnehmers zurückgesetzt werden. Dann kann der zweite Busteilnehmer die genannte Überprüfung dann als negativ ausgefallen interpretieren, wenn ein Leitwert des Zeitgebers einen vorbestimmten Grenzwert erreicht. Eine solche Vorgehensweise kann ohne viel Aufwand implementiert werden und ist auch besonders zuverlässig.

Also wird der vorbestimmte Algorithmus durch den zweiten Busteilnehmer dann gestartet, wenn die Überprüfung, ob der erste Busteilnehmer die Präsenznachricht sendet, negativ ausfällt. Die Entscheidung, ob der vorbestimmte Algorithmus durchgeführt werden soll oder nicht, kann auch plausibilisiert werden: Der Algorithmus kann durch den zweiten Busteilnehmer erst dann durchgeführt werden, wenn eine vorbestimmte Anzahl der genannten Überprüfungen negativ ausfallen bzw. wenn der zweite Busteilnehmer mehrmals feststellt, dass der erste Busteilnehmer keine Präsenznachricht sendet. Dies kann beispielsweise so aussehen, dass der genannte Zeitgeber auch jeweils nach Erreichen des vorbestimmten Grenzwertes zurückgesetzt wird. Empfängt in diesem Falle der zweite Busteilnehmer über eine vorbestimmte Anzahl (zwei oder drei oder vier) von Zurücksetzungen des Zeitgebers hinweg keine Präsenznachricht des ersten Busteilnehmers, so kann der vorbestimmte Algorithmus gestartet werden.

Der vorbestimmte Algorithmus kann ein Suchalgorithmus sein: Er kann beispielsweise beinhalten, dass durch den zweiten Busteilnehmer eine Anforderungsnachricht an den Kommunikationsbus gesendet wird, durch welche der erste Busteilnehmer dazu aufgefordert wird, seine Präsenznachricht zu senden. Auf diese Weise kann der erste Busteilnehmer quasi wieder "aufgesucht" werden. Sendet der erste Busteilnehmer auch auf diese Aufforderung hin keine Präsenznachricht, so kann der zweite Busteilnehmer beispielsweise ein Informationssignal - etwa mithilfe einer Anzeigeeinrichtung - ausgeben, durch welches eine Bedienperson über den Fehler des ersten Busteilnehmers informiert wird.

Wie bereits ausgeführt, übertragen bevorzugt eine Vielzahl von Busteilnehmern, insbesondere alle an den Kommunikationsbus angeschlossenen Busteilnehmer, jeweils eine Präsenznachricht an den Kommunikationsbus, nämlich in vorbestimmten Zeitabständen. Auch eine Vielzahl von Busteilnehmern, insbesondere alle an den Kommunikationsbus angeschlossenen Busteilnehmer, können überprüfen, ob die anderen Busteilnehmer ihre Präsenznachrichten senden oder nicht. Falls einer der Busteilnehmer von einem anderen Busteilnehmer keine Präsenznachricht empfängt, kann der vorbestimmte Algorithmus durch denjenigen Busteilnehmer durchgeführt werden, welcher keine Präsenznachricht empfängt. Es kann auch vorkommen, dass mehrere Busteilnehmer feststellen, dass ein anderer Busteilnehmer keine Präsenznachricht sendet. In einem solchen Falle wird vorzugsweise vermieden, dass mehrere Busteilnehmer gleichzeitig den vorbestimmten Algorithmus durchführen, also insbesondere die Anforderungsnachricht über den Kommunikationsbus senden. Dies kann beispielsweise so aussehen, dass gemäß einer Zufallsfunktion entschieden wird, welcher der Busteilnehmer den vorbestimmten Algorithmus durchführen soll. Wird auf die Anforderungsnachricht hin doch eine Präsenznachricht durch den angeblich fehlerhaften Busteilnehmer gesendet, so werden die anderen Busteilnehmer gleichzeitig darüber informiert, dass der angeblich fehlerhafte Busteilnehmer doch ordnungsgemäß funktioniert.

Die Erfindung betrifft auch ein Bussystem, welches einen Kommunikationsbus zum Übertragen von Nachrichten sowie eine Mehrzahl von an den Kommunikationsbus angeschlossenen Busteilnehmern umfasst. Die Busteilnehmer sind einzelne Haushaltsgeräte oder aber geräteinterne Komponenten für ein Haushaltsgerät. Zumindest ein erster Busteilnehmer ist dazu ausgelegt, in seinem ordnungsgemäßen Betrieb in vorbestimmten Zeitabständen eine Präsenznachricht an den Kommunikationsbus zu übertragen, welche den Betrieb beziehungsweise die Präsenz des ersten Busteilnehmers signalisiert.

Ein erfindungsgemäßes Haushaltsgerät umfasst ein Bussystem, welches einen Kommunikationsbus zum Übertragen von Nachrichten sowie eine Mehrzahl von an den Kommunikationsbus angeschlossenen Busteilnehmern umfasst. Zumindest ein erster Busteilnehmer überträgt in seinem ordnungsgemäßen Betrieb in vorbestimmten Zeitabständen eine Präsenznachricht über den Kommunikationsbus, welche den Betrieb des ersten Busteilnehmers signalisiert.

Die mit Bezug auf das erfindungsgemäße Verfahren vorgestellten bevorzugten Ausführungsformen und deren Vorteile gelten entsprechend für das erfindungsgemäße Bussystem, wie auch für das erfindungsgemäße Haushaltsgerät.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

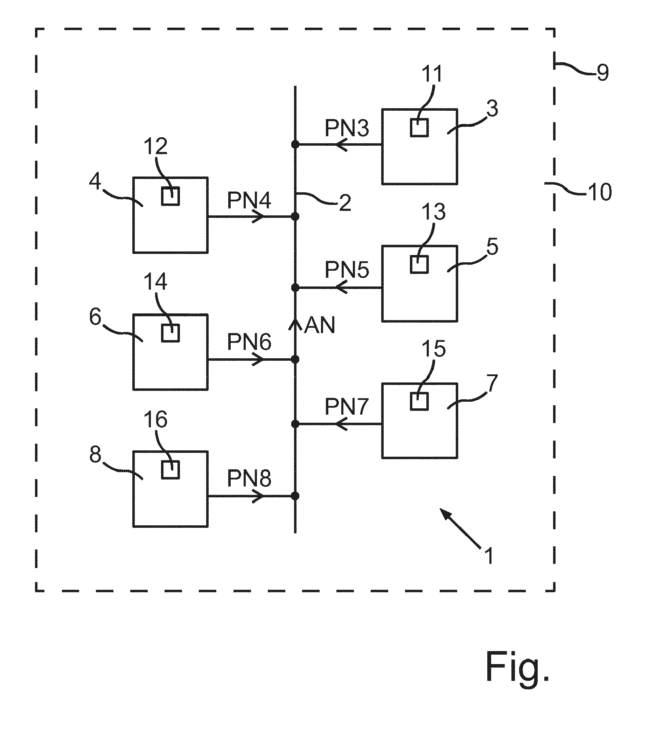

Die Erfindung wird nun anhand eines bevorzugten Ausführungsbeispiels näher erläutert, wie auch unter Bezugnahme auf die beigefügte Zeichnung. Die einzige Figur veranschaulicht in schematischer Darstellung ein Bussystem gemäß einer Ausführungsform der Erfindung, wobei ein Verfahren gemäß einer Ausführungsform der Erfindung näher erläutert wird.

Ein in der Figur dargestelltes Bussystem 1 beinhaltet einen Kommunikationsbus 2, etwa eine elektrische Leitung. An den Kommunikationsbus 2 sind eine Vielzahl von Busteilnehmern 3 bis 8 angeschlossen. Über den Kommunikationsbus 2 können die Busteilnehmer 3 bis 8 miteinander kommunizieren, nämlich Daten austauschen.

Die Busteilnehmer 3 bis 8 können einzelne Haushaltsgeräte in einem Haushalt 9 sein. In diesem Falle können die Busteilnehmer 3 bis 8 miteinander über ein Stromnetz miteinander kommunizieren; dann ist der Kommunikationsbus 2 eine Netzleitung bzw. eine Stromleitung (Power Line Communication). Es kann aber auch ein von einem Stromnetz separater Kommunikationsbus 2 bereitgestellt werden. Alternativ kann der Kommunikationsbus 2 auch ein drahtloser Kommunikationskanal sein. In einem alternativen Ausführungsbeispiel kann das Bussystem 1 auch ein internes Bussystem eines Haushaltsgeräts 10 sein. Dann sind die Busteilnehmer 3 bis 8 interne Komponenten des Haushaltsgeräts 10. In diesem Falle können die Busteilnehmer 3 bis 8 beispielsweise Mikroprozessoren bzw. Mikrokontroller sein, die innerhalb des Haushaltsgeräts 10 miteinander Daten austauschen können.

Nach einer Inbetriebnahme des Bussystems 1 sowie nach einem erfolgreichen Verbindungsaufbau speichert jeder Busteilnehmer 3 bis 8 eine Information darüber, welche Busteilnehmer 3 bis 8 bzw. welche Kommunikationspartner an den Kommunikationsbus 2 angeschlossen sind. Mit anderen Worten speichert jeder Busteilnehmer 3 bis 8 eine Information über die Präsenz der angeschlossenen Kommunikationspartner. Dies kann beispielsweise so aussehen, dass nach erfolgreichem Verbindungsaufbau jeder Busteilnehmer 3 bis 8 eine Nachricht über den Kommunikationsbus 2 sendet, durch welche seine Präsenz den anderen Busteilnehmern 3 bis 8 angezeigt wird. Es kann jedoch auch vorgesehen sein, dass nach einem erfolgreichen Verbindungsaufbau die Busteilnehmer 3 bis 8 eine Aufforderung an die jeweils anderen Busteilnehmer 3 bis 8 senden, nämlich dazu, die jeweilige Präsenz anzuzeigen.

Der weitere Betrieb des Bussystems 1 sieht wie folgt aus:

Alle Busteilnehmer 3 bis 8 senden jeweils in vorbestimmten Zeitabständen periodisch eine eigene Präsenznachricht PN3 bis PN8 an den Kommunikationsbus 2, nämlich an die jeweils anderen Busteilnehmer 3 bis 8. Die Präsenznachrichten PN3 bis PN8 sind Gruppennachrichten und somit für alle Busteilnehmer 3 bis 8 bestimmt. Durch die Präsenznachrichten PN3 bis PN8 wird die Präsenz bzw. der Betrieb der jeweiligen Busteilnehmer 3 bis 8 jeweils den anderen Busteilnehmern 3 bis 8 signalisiert. Die Präsenznachrichten PN3 bis PN8 werden durch die Busteilnehmer 3 bis 8 im ordnungsgemäßen Betrieb gesendet. Die Präsenznachrichten PN3 bis PN8 werden durch die Busteilnehmer 3 bis 8 alleine aufgrund von internen Informationen, also quasi von sich selbst gesendet. Im ordnungsgemäßen Betrieb der Busteilnehmer 3 bis 8 bedarf es also keiner zusätzlichen Anforderung der anderen Busteilnehmer 3 bis 8, damit die Busteilnehmer 3 bis 8 ihre Präsenznachrichten PN3 bis PN8 periodisch senden.

Alle Busteilnehmer 3 bis 8 überprüfen auch, ob die anderen Busteilnehmer 3 bis 8 ihre Präsenznachrichten PN3 bis PN8 senden oder nicht. Die Busteilnehmer 3 bis 8 beinhalten dabei jeweils einen Zeitgeber 11 bis 16, der nach Empfang der Präsenznachrichten PN3 bis PN8 zurückgesetzt wird. Jeder Busteilnehmer 3 bis 8 überprüft, ob nach dem Empfang der letzten Präsenznachrichten PN3 bis PN8 der anderen Busteilnehmer 3 bis 8 weitere Präsenznachrichten PN3 bis PN8 innerhalb einer vorbestimmten Zeitdauer gesendet werden oder nicht. Stellt beispielsweise ein erster der Busteilnehmer 3 bis 8 fest, dass seit dem Empfang der letzten Präsenznachricht PN3 bis PN8 eines anderen zweiten Busteilnehmers 3 bis 8 die vordefinierte Zeitdauer verstrichen ist und dieser zweite Busteilnehmer 3 bis 8 innerhalb dieser Zeitdauer keine Präsenznachricht PN3 bis PN8 gesendet hat, so wird ein Zähler erhöht bzw. inkrementiert und der Zeitgeber zurückgesetzt. Erreicht dieser Zähler einen vorbestimmten Grenzwert - zum Beispiel 2 oder 3 oder 4 -, so wird ein vorbestimmter Algorithmus durch denjenigen Busteilnehmer 3 bis 8 durchgeführt, welcher das Fehlen der Präsenznachricht PN3 bis PN8 eines anderen Busteilnehmers 3 bis 8 festgestellt hat. Wird dies durch mehrere Busteilnehmer 3 bis 8 festgestellt, so kann gemäß einer Zufallsfunktion festgelegt werden, welcher der Busteilnehmer 3 bis 8 den vorbestimmten Algorithmus durchführen soll.

Der vorbestimmte Algorithmus hat zum Inhalt, dass eine Anforderungsnachricht AN über den Kommunikationsbus 2 übertragen wird, durch welche der angeblich fehlerhafte Busteilnehmer 3 bis 8 oder aber alle Busteilnehmer 3 bis 8 dazu aufgefordert wird/werden, die Präsenznachricht PN3 bis PN8 zu senden. Meldet sich der angeblich fehlerhafte Busteilnehmer auch auf diese Anforderung hin nicht, so kann beispielsweise eine Meldung an die Bedienperson ausgegeben werden.

### Bezugszeichenliste

- 1: Bussystem
- 2: Kommunikationsbus
- 3 bis 8: Busteilnehmer
- 9: Haushalt
- 10: Haushaltsgerät
- PN3 bis PN8: Präsenznachrichten
- 11 bis 16: Zeitgeber
- AN: Anforderungsnachricht

## Patentansprüche

1. Verfahren zum Betreiben eines Bussystems (1) für Haushaltsgeräte, bei welchem das Bussystem (1) einen Kommunikationsbus (2) zum Übertragen von Nachrichten (PN3 bis PN8, AN) sowie eine Mehrzahl von an den Kommunikationsbus (2) angeschlossenen Busteilnehmern (3 bis 8) aufweist, **dadurch gekennzeichnet, dass** durch zumindest einen ersten Busteilnehmer (3 bis 8) in seinem ordnungsgemäßen Betrieb in vorbestimmten Zeitabständen eine Präsenznachricht (PN3 bis PN8) an den Kommunikationsbus (2) übertragen wird, durch welche der Betrieb des ersten Busteilnehmers (3 bis 8) signalisiert wird.

2. Verfahren nach Anspruch 1, **dadurch gekennzeichnet, dass** die Präsenznachricht (PN3 bis PN8) durch den ersten Busteilnehmer (3 bis 8) ausschließlich aufgrund von internen Informationen gesendet wird.

3. Verfahren nach Anspruch 1 oder 2, **dadurch gekennzeichnet, dass** in seinem ordnungsgemäßen Betrieb der zumindest erste Busteilnehmer (3 bis 8) die Präsenznachricht (PN3 bis PN8) periodisch sendet.

4. Verfahren nach einem der vorhergehenden Ansprüche, **gekennzeichnet durch** die Schritte:
- **durch** zumindest einen zweiten Busteilnehmer (3 bis 8) Überprüfen, ob der erste Busteilnehmer (3 bis 8) die Präsenznachricht (PN3 bis PN8) sendet, und
- falls diese Überprüfung negativ ausfällt, Durchführen eines vorbestimmten Algorithmus **durch** den zweiten Busteilnehmer (3 bis 8).

5. Verfahren nach Anspruch 4, **dadurch gekennzeichnet, dass** die genannte Überprüfung dann durch den zweiten Busteilnehmer (3 bis 8) als negativ ausgefallen interpretiert wird, wenn seit dem Empfang der letzten Präsenznachricht (PN3 bis PN8) des ersten Busteilnehmers (3 bis 8) eine vordefinierte Zeitdauer verstreicht und innerhalb dieser Zeitdauer der zweite Busteilnehmer (3 bis 8) keine Präsenznachricht (PN3 bis PN8) des ersten Busteilnehmers (3 bis 8) empfängt.

6. Verfahren nach Anspruch 4 oder 5, **dadurch gekennzeichnet, dass** der vorbestimmte Algorithmus beinhaltet, dass durch den zweiten Busteilnehmer (3 bis 8) eine Anforderungsnachricht (AN) an den Kommunikationsbus (2) gesendet wird, durch welche der erste Busteilnehmer (3 bis 8) dazu aufgefordert wird, die Präsenznachricht (PN3 bis PN8) zu senden.

7. Verfahren nach einem der vorhergehenden Ansprüche, **dadurch gekennzeichnet, dass** die Busteilnehmer (3 bis 8) Haushaltsgeräte sind, welche über den Kommunikationsbus (2) miteinander kommunizieren.

8. Verfahren nach einem der Ansprüche 1 bis 6, **dadurch gekennzeichnet, dass** die Busteilnehmer (3 bis 8) geräteinterne Komponenten eines Haushaltsgerätes (10) sind, welche innerhalb des Haushaltsgerätes (10) über den Kommunikationsbus (2) miteinander kommunizieren.

9. Bussystem (1), welches umfasst:
- einen Kommunikationsbus (2) zum Übertragen von Nachrichten (PN3 bis PN8, AN) und
- eine Mehrzahl von an den Kommunikationsbus (2) angeschlossenen Busteilnehmern (3 bis 8), welche einzelne Haushaltsgeräte oder geräteinterne Komponenten für ein Haushaltsgerät (10) sind,
**dadurch gekennzeichnet, dass**
zumindest ein erster Busteilnehmer (3 bis 8) dazu ausgelegt ist, in seinem ordnungsgemäßen Betrieb in vorbestimmten Zeitabständen eine Präsenznachricht (PN3 bis PN8) an den Kommunikationsbus (2) zu übertragen, welche den Betrieb des ersten Busteilnehmers (3 bis 8) signalisiert.

10. Haushaltsgerät (10) mit einem Bussystem (1), welches umfasst:
- einen Kommunikationsbus (2) zum Übertragen von Nachrichten (PN3 bis PN8, AN) und
- eine Mehrzahl von an den Kommunikationsbus (2) angeschlossenen Busteilnehmern (3 bis 8),
**dadurch gekennzeichnet, dass**
zumindest ein erster Busteilnehmer (3 bis 8) dazu ausgelegt ist, in seinem ordnungsgemäßen Betrieb in vorbestimmten Zeitabständen eine Präsenznachricht (PN3 bis PN8) an den Kommunikationsbus (2) zu übertragen, welche den Betrieb des ersten Busteilnehmers (3 bis 8) signalisiert.
